# EUROPÄISCHE PATENTSCHRIFT

(11) **EP 1 287 052 B1**
(45) Veröffentlichungstag und Bekanntmachung des Hinweises auf die Patenterteilung: **04.08.2004**
(21) Anmeldenummer: 01947261.2
(22) Anmeldetag: 07.05.2001
(51) Int. Cl.: C08G 18/08, C08G 18/77

(54) **MODIFIZIERTE POLYISOCYANATE**
MODIFIED POLYISOCYANATES
POLYISOCYANATES MODIFIES

(30) Priorität: 18.05.2000 DE 10024624
(43) Veröffentlichungstag der Anmeldung: 05.03.2003
(73) Patentinhaber: Bayer MaterialScience AG, 51368 Leverkusen (DE)
(72) Erfinder: LAAS, Hans-Josef, 51467 Bergisch Gladbach (DE); HALPAAP, Reinhard, 51519 Odenthal (DE)
(86) Internationale Anmeldenummer: PCT/EP2001/005143
(87) Internationale Veröffentlichungsnummer: WO 2001/088006

(56) Entgegenhaltungen:
- EP-A- 0 324 370
- EP-A- 0 703 255
- DE-A- 1 495 745

## Beschreibung

Die Erfindung betrifft modifizierte Polyisocyanate und Polyisocyanatgemische, ein Verfahren zu ihrer Herstellung und ihre Verwendung als Ausgangskomponente bei der Herstellung von Polyurethan-Kunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Vor dem Hintergrund einer zunehmend strengeren Urnweltgesetzgebung gewannen in den letzten Jahren wasserdispergierbare Polyisocyanate für verschiedene Anwendungsgebiete an Bedeutung. Sie finden heute insbesondere als Vernetzerkomponenten für qualitativ hochwertige wasserverdünnbare Zweikomponenten-Polyurethan-Lacke (2K-PUR-Lacke) oder als Zusatzmittel für wässrige Dispersionsklebstoffe Verwendung, dienen zur Vernetzung wässriger Dispersionen in der Textilausrüstung oder formaldehydfreier Textildruckfarben und eignen sich darüberhinaus beispielsweise auch als Hilfsmittel zur Nassverfestigung von Papier (vgl z. B. EP-A 0 959 087 und hierin zitierte Literatur).

In der Praxis werden für alle diese Anwendungsgebiete heute praktisch ausschließlich nichtionische, mit Hilfe von Polyethern hydrophil-modifizierte Polyisocyanate eingesetzt. Die Herstellung solcher wasserdispergierbaren Polyisocyanate wird beispielsweise in EP-A 0 959 087, Seite 2, Zeilen 25 - 46 ausführlich diskutiert.

Trotz ihrer breiten Marktakzeptanz für die unterschiedlichsten Anwendungen weisen Polyether-modifizierte Polyisocyanate jedoch eine Reihe prinzipieller Nachteile auf. Sie lassen sich beispielsweise aufgrund eines sehr hohen, während der Dispergierung zu überwindenden Viskositätsmaximums häufig nur unter Anwendung erheblicher Scherkräfte (z.B. Hochgeschwindigkeitsrührer) homogen in wässrige Medien einarbeiten. Der insbesondere bei einem Einsatz als Vernetzer in wässrigen 2K-PUR-Lacken für eine ausreichende Dispergierbarkeit erforderliche hohe Polyethergehalt verleiht darüberhinaus den erhaltenen Beschichtungen eine permanente Hydrophilie.

Zur Umgehung dieser Nachteile wurde auch bereits versucht, durch Einbau ionischer Gruppen hydrophil modifizierte, selbstdispergierbare Polyisocyanate herzustellen.

Die EP-A 0 443 138, EP-A 0 510 438 und EP-A 0 548 669 beschreiben beispielsweise Polyisocyanatgemische, die chemisch gebundene Carboxylgruppen enthalten. Solche Polyisocyanate lassen sich zwar nach Neutralisation der Carboxylgruppen sehr feinteilig in wässrige Systeme einrühren, ohne dass hohe Scherkräfte erforderlich sind, sie weisen aber insbesondere in neutralisierter Form eine völlig ungenügende Lagerstabilität auf. Aufgrund der bekannten katalytischen Aktivität der Carboxylatgruppe setzt bereits bei Raumtemperatur eine Polymerisation der Isocyanatgruppen, beispielsweise unter Trimerisierung zu Polyisocyanuraten oder Bildung von α-Nylonstrukturen ein, die in der Regel nach wenigen Tagen zum Gelieren des Produktes führt.

Die EP-A 0 703 255 beschreibt ionisch hydrophilierte wasseremulgierbare Polyisocyanate, die als Emulgatoren Reaktionsprodukte aus Polyisocyanat und beliebigen hydroxy-, mercapto- oder aminofunktionellen Verbindungen mit mindestens einer schwefelsauren Gruppe bzw. deren Anion enthalten. Als bevorzugte schwefelsaure Aufbaukomponenten zur Herstellung der Emulgatoren werden dabei Hydroxysulfonsäuren mit aliphatisch gebundenen OH-Gruppen bzw. Salze solcher Hydroxysulfonsäuren genannt, beispielsweise spezielle Polyethersulfonate, wie sie z. B. unter der Bezeichnung Tegomer® (Th. Goldschmidt AG, Essen, DE) gehandelt werden, Bisulfit-Addukte an ungesättigte Alkohole, wie sie z. B. nach der Lehre der DE-A 2 417 664, DE-A 2 437 218 oder DE-A 2 446 440 erhältlich sind, Hydroxyethan- und Hydroxypropansulfonsäure sowie Aminosulfobetaine, die sich durch Quaternierung tertiärer Aminoalkohole mit 1,3-Propansulton herstellen lassen. Diese Hydrophilierungsmittel weisen jedoch ebenfalls eine Reihe von Nachteilen auf.

So steht Hydroxypropansulfonsäure beispielsweise im Gleichgewicht mit ihrem Anhydrid, dem als cancerogen eingestuften 1,3-Propansulton. Sie lässt sich daher insbesondere im technischen Maßstab ausschließlich in Form wässriger Lösungen handhaben und ist somit als Aufbaukomponente zur Herstellung modifizierter Polyisocyanate grundsätzlich ungeeignet.

Hydroxyethansulfonsäure, Polyethersulfonate vom Typ Tegomer® sowie die genannten Bisulfitaddukte an ungesättigte Alkohole stehen dagegen auch großtechnisch in Form ihrer Natriumsalze wasserfrei zur Verfügung. Die Verwendung dieser Natriumsalze gestattet zwar prinzipiell die Herstellung wasseremulgierbarer Polyisocyanate, für den Einsatz als Vernetzerkomponenten in wässrigen Lacksystemen sind diese allerdings nur sehr bedingt geeignet. Aufgrund der nur geringen Verträglichkeit von Alkali-neutralisierten Sulfonatgruppen mit üblichen Lackbindemitteln führt ihre Verwendung in wässrigen 2K-PUR-Lacken im allgemeinen zu trüben, teilweise inhomogenen Beschichtungen. Im Gegensatz zu den üblicherweise in Dispersionen eingesetzten flüchtigen Neutralisationsaminen verbleibt das Natriumion auch nach Aushärtung im Lackfilm und verleiht diesem eine dauerhafte Hydrophilie.

Darüberhinaus führen sämtliche in der EP-A 0 703 255 als hydrophile Komponenten vorgeschlagenen Hydroxysulfonsäuren, wie die konkreten Ausführungsbeispiele dieser Veröffentlichung belegen, in der Regel zu deutlich gelb gefärbten Polyisocyanaten, was einem Einsatz dieser Produkte als Vemetzerkomponente in qualitativ hochwertigen Lacksystemen ebenfalls entgegensteht. Sulfonatgruppen-modifizierte Polyisocyanate konnten sich aus den genannten Gründen bis heute im Markt nicht etablieren.

Aufgabe der vorliegenden Erfindung war es daher, neue wasserdispergierbare Polyisocyanate zur Verfügung zu stellen, die sich für sämtliche Anwendungsgebiete wasserdispergierbarer Polyisocyanate eignen und nicht mit den Nachteilen des Standes der Technik behaftet sind. Diese neuen Polyisocyanate sollten auf gut zugänglichen, toxikologisch unbedenklichen Aufbaukomponenten basieren, die eine freie Wahl des Neutralisationsmittels gestatten, und insbesondere mit üblichen Lackbindemitteln gut verträglich sein.

Diese Aufgabe konnte mit der Bereitstellung der nachfolgend näher beschriebenen erfindungsgemäßen wasserdispergierbaren Polyisocyanate bzw. Polyisocyanatgemische gelöst werden. Zur Vereinfachung der Beschreibung der vorliegenden Erfindung steht im folgenden der Begriff "Polyisocyanat" synonym auch für Gemische verschiedener Polyisocyanate.

Die vorliegende Erfindung basiert auf der überraschenden Beobachtung, dass sich 2-(Cyclohexylamino)-ethansulfonsäure und 3-(Cyclohexylamino)-propansulfonsäure, die im allgemeinen als zwitterionische biologische Puffersubstanzen Verwendung finden, trotz ihrer Schmelzpunkte von über 300°C in Gegenwart eines geeigneten Neutralisationsamins bereits unter sehr milden Reaktionsbedingungen mit Polyisocyanaten umsetzen lassen, wobei lagerstabile, farbhelle Produkte erhalten werden, die sich feinteilig in Wasser emulgieren lassen. Dies war überraschend, da eine Reihe weiterer strukturell sehr ähnlicher Aminosulfonsäuren selbst unter erheblich drastischeren Bedingungen nicht mit Polyisocyanaten zur Reaktion gebracht werden können.

Obwohl in einigen Veröffentlichungen, beispielsweise der EP-A 0 061 628 und der EP-A 0 206 059, die Polyether-modifizierte Polyisocyanate zum Gegenstand haben, auch die Verwendung Sulfonatgruppen enthaltender Verbindungen zur Herstellung hydrophiler Polyisocyanate pauschal mit erwähnt wird, und auch in der EP-A 0 469 389 Hydroxysulfonsäuren und Aminosulfonsäuren als geeignete Aufbaukomponenten für wasserdispergierbare Vernetzer genannt werde, konnte der Fachmann diesen Veröffentlichungen ebensowenig wie der Lehre der EP-A 0 703 255 irgendeinen Hinweis auf die besondere Eignung von 2-(Cyclohexylamino)-ethansulfonsäure und 3-(Cyclohexylamino)-propansulfonsäure zur Herstellung wasserdispergierbarer Polyisocyanate entnehmen.

Gegenstand der vorliegenden Erfindung sind daher durch Umsetzung von Polyisocyanaten mit 2-(Cyclohexylamino)-ethansulfonsäure und/oder 3-(Cyclohexylamino)-propansulfonsäure erhältliche modifizierte Polyisocyanate. Diese sind nach zumindest anteiliger Neutralisierung der Sulfonsäuregruppen in Wasser dispergierbar.

Ebenfalls Gegenstand der Erfindung ist die Verwendung dieser Sulfonsäuren zur Herstellung wasserdispergierbarer Polyisocyanate.

Die Dispergierbarkeit von bereits mit beispielsweise Ethylenoxidpolyether-Einheiten modifizierten Polyisocyanaten wird durch die erfindungsgemäße Modifizierung mit 2-(Cyclohexylamino)-ethansulfonsäure und/oder 3-(Cyclohexylamino)-propansulfonsäure erheblich verbessert, so dass auf die Verwendung externer Emulgatoren oder die Anwendung von hohen Scherkräften verzichtet werden kann, was die Herstellung der gebrauchsfertigen Formulierungen erheblich vereinfacht. Dies ist ein weiterer Aspekt der vorliegenden Erfindung.

Insbesondere werden erfindungsgemäß Polyisocyanate mit
a) einer mittleren Isocyanatfunktionalität von mindestens 1,8,
b) einem Gehalt an Isocyanatgruppen (berechnet als NCO; Molekulargewicht = 42) von 4,0 bis 26,0 Gew.-%,
c) einem Gehalt an Sulfonatgruppen (berechnet als SO₃⁻; Molekulargewicht = 80) von 0,1 bis 7,7 Gew.-% und gegebenenfalls
d) einem Gehalt an innerhalb von Polyetherketten gebundenen Ethylenoxideinheiten (berechnet als C₂H₂O; Molekulargewicht = 44) von 0 bis 19,5 Gew.-%, wobei die Polyetherketten im statistischen Mittel 5 bis 35 Ethylenoxideinheiten enthalten,
die durch Umsetzung aliphatischer, cycloaliphatischer, araliphatischer und/oder aromatischer Polyisocyanate mit 2-(Cyclohexylamino)-ethansulfonsäure und/oder 3-(Cyclohexylamino)-propansulfonsäure erhältlich sind, bereitgestellt.

Gegenstand der Erfindung ist auch ein Verfahren zur Herstellung dieser modifizierten Polyisocyanate. Ein Polyisocyanat wird hierzu mit 2-(Cyclohexylamino)-ethansulfonsäure und/oder 3-(Cyclohexylamino)-propansulfonsäure umgesetzt, wobei diese Umsetzung in Gegenwart von Ethylenoxideinheiten aufweisenden Polyalkylenoxidpolyetheralkoholen erfolgen kann und/oder die eingesetzten Polyisocyanate enthalten gegebenenfalls bereits solche Einheiten. Zur Neutralisation von Sulfonsäuregruppen wird die Umsetzung in Gegenwart von tertiären Aminen durchgeführt.

Insbesondere wird die Umsetzung so durchgeführt, dass
A) eine Polyisocyanatkomponente einer mittleren Funktionalität von 2,0 bis 5,0, mit einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% mit
B) 0,3 bis 25,0 Gew.-%, bezogen auf das Gesamtgewicht der Komponenten A) und B), 2-(Cyclohexylamino)-ethansulfonsäure und/oder 3-(Cyclohexylamino)-propansulfonsäure und gegebenenfalls
C) bis zu 25 Gew.-%, bezogen auf das Gesamtgewicht der Komponenten A), B) und C), eines einwertigen, im statistischen Mittel von 5 bis 35 Ethylenoxideinheiten aufweisenden Polyalkylenoxidpolyetheralkohols in Gegenwart von
D) 0,2 bis 2,0 Äquivalenten, bezogen auf die Sulfonsäuregruppen der Komponente B), eines tertiären Amins
unter Einhaltung eines Äquivalentverhältnisses von NCO-Gruppen zu gegenüber NCO-Gruppen reaktiven Gruppen von 2 : 1 bis 400 : 1 miteinander umgesetzt werden. Dabei werden im übrigen Art und Mengenverhältnisse der genannten Ausgangsverbindungen so gewählt, dass die resultierenden Umsetzungsprodukte den oben unter a) bis d) genannten Bedingungen entsprechen.

Gegenstand der Erfindung ist auch die Verwendung dieser Polyisocyanate als Ausgangskomponenten bei der Herstellung von Polyurethan-Kunststoffen, insbesondere als Vernetzer für wasserlösliche oder -dispergierbare Lackbindemittel oder Lackbindemittelkomponenten bei der Herstellung von Überzügen unter Verwendung von wässrigen Beschichtungsmitteln auf Basis derartiger Bindemittel oder Bindemittelkomponenten.

Gegenstand der Erfindung ist schließlich auch die Verwendung dieser Polyisocyanate als Ausgangskomponenten bei der Herstellung wasserdispergierbarer oder in Wasser dispergiert vorliegender blockierter Polyisocyanate.

Die beim erfindungsgemäßen Verfahren einzusetzende Komponente A) weist in der Regel eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% auf. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten der Komponente A) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate. Bevorzugte Isocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich bei den Ausgangskomponenten A) um Polyisocyanate der genannten Art mit ausschließlich aliphatisch und/oder cycloaliphatisch gebundenen Isocyanatgruppen.

Ganz besonders bevorzugte Ausgangskomponenten A) sind Polyisocyanate mit Isocyanuratstruktur auf Basis von HDI, IPDI und/oder 4,4'-Diisocyanatodicyclohexylmethan.

Neben diesen hydrophoben Polyisocyanaten eignen sich als Ausgangsverbindungen A) aber auch mit Hilfe von Ethylenoxidpolyethem hydrophil modifizierte Polyisocyanate, wie sie beispielsweise nach den in der EP-A 0 959 087, Seite 2, Zeilen 25-46 beschriebenen Verfahren erhältlich sind.

Bei der Komponente B) handelt es sich um 2-(Cyclohexylamino)-ethansulfonsäure (CHES), 3-(Cyclohexylamino)-propansulfonsäure (CAPS) oder beliebige Gemische dieser beiden Aminosulfonsäuren. Diese Verbindungen sind bekannt, sie liegen als zwitterionische Substanzen in kristalliner Form vor und weisen Schmelzpunkte von über 300°C auf. Die Herstellung von CHES bzw. CAPS ist beispielsweise in Bull. Soc. Chim. France **1985**, 463 bzw. in Z. Chem. 7, 151 (1967) beschrieben.

Diese Aminosulfonsäuren B) kommen beim erfindungsgemäßen Verfahren in Mengen von 0,3 bis 25 Gew.-%, vorzugsweise von 0,5 bis 25 Gew.-%, bezogen auf das Gesamtgewicht der Komponenten A) und B), zum Einsatz.

Bei der gegebenenfalls mitverwendeten Komponente C) handelt es sich um einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31- 38).

Als geeignete Startermoleküle zur Herstellung der beim erfindungsgemäßen Verfahren eingesetzten Polyetheralkohole C) seien hier beispielhaft genannt: Gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen C) handelt es sich entweder um reine Polyethylenoxidpolyether oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte Ausgangskomponenten C) für das erfindungsgemäße Verfahren sind reine Polyethylenglycolmonomethyletheralkohole, die im statistischen Mittel 7 bis 30, ganz besonders bevorzugt 7 bis 25 Ethylenoxideinheiten aufweisen.

Die Polyetheralkohole C) kommen beim erfindungsgemäßen Verfahren, falls überhaupt, in Mengen von bis zu 25 Gew.-%, vorzugsweise bis zu 20 Gew.-%, bezogen auf das Gesamtgewicht der Komponenten A), B) und C), zum Einsatz.

Zur Neutralisation der Sulfonsäuregruppen der Ausgangskomponenten B) werden beim erfindungsgemäßen Verfahren tertiäre Amine D) eingesetzt. Dabei handelt es sich beispielsweise um tertiäre Monoamine, wie z. B. Trimethylamin, Triethylamin, Tripropylamin, Tributylamin, Dimethylcyclohexylamin, N-Methylmorpholin, N-Ethylmorpholin, N-Methylpiperidin, N-Ethylpiperidin, oder um tertiäre Diamine, wie z. B. 1,3-Bis-(dimethylamino)-propan, 1,4-Bis-(dimethylamino)-butan oder N,N'-Dimethylpiperazin. Geeignete, jedoch weniger bevorzugte Neutralisationsamine sind aber auch gegenüber Isocyanaten reaktive Gruppen tragende tertiäre Amine, beispielsweise Alkanolamine, wie z. B. Dimethylethanolamin, Methyldiethanolamin oder Triethanolamin.

Diese Neutralisationsamine D) kommen beim erfindungsgemäßen Verfahren in solchen Mengen zum Einsatz, die einem Äquivalentverhältnis von tertiären Aminogruppen zu Sulfonsäuregruppen der Komponente B) von 0,2 bis 2,0, vorzugsweise von 0,5 bis 1,5 entsprechen.

Zur Durchführung des erfindungsgemäßen Verfahrens werden die Ausgangskomponenten A), B) und gegebenenfalls C) in Gegenwart eines tertiären Amins D) bei Temperaturen von 40 bis 150°C, vorzugsweise 50 bis 130°C, unter Einhaltung eines Äquivalent-Verhältnisses von NCO-Gruppen zu gegenüber NCO-Gruppen reaktiven Gruppen von 2:1 bis 400:1, vorzugsweise von 4:1 bis 250:1, vorzugsweise bis zum Erreichen des theoretisch errechneten NCO-Gehalts miteinander umgesetzt.

Die Gegenwart des tertiären Amins D) katalysiert die Reaktion der Komponenten A), B) und gegebenenfalls C) in der Regel ausreichend, jedoch können zur Beschleunigung der Umsetzung beim erfindungsgemäßen Verfahren gegebenenfalls weitere übliche aus der Polyurethanchemie bekannten Katalysatoren eingesetzt werden, beispielsweise weitere tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat oder beliebige Gemische solcher Katalysatoren.

Diese Katalysatoren kommen beim erfindungsgemäßen Verfahren, falls überhaupt, in einer Menge von 0,001 bis 2 Gew.-%, vorzugsweise 0,005 bis 0,5 Gew.-%, bezogen auf das Gesamtgewicht der Reaktionspartner zum Einsatz.

Das erfindungsgemäße Verfahren kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschbom, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und - butyletheracetat, N-Methylpyrrolidon und N-Methylcaprolactam, oder beliebige Gemische solcher Lösemittel.

Im übrigen werden beim erfindungsgemäßen Verfahren Art und Mengenverhältnisse der Ausgangskomponenten im Rahmen der gemachten Angaben so gewählt, dass die resultierenden Polyisocyanate den oben unter a) bis d) gemachten Angaben entsprechen, wobei a) die mittlere NCO-Funktionalität vorzugsweise 2,0 bis 4,8, besonders bevorzugt 2,4 bis 3,8, b) der NCO-Gehalt vorzugsweise 7,0 bis 23,0 Gew.-%, besonders bevorzugt 10,0 bis 22,0 Gew.-%, c) der Gehalt an Sulfonatgruppen (berechnet als SO₃⁻; Molekulargewicht = 80) vorzugsweise 0,2 bis 6,3 Gew.-%, besonders bevorzugt 0,6 bis 4,8 Gew.-%, und d) der Gehalt an innerhalb von Polyetherketten gebundenen Ethylenoxideinheiten vorzugsweise bis zu 17 Gew.-%, besonders bevorzugt bis zu 15 Gew.-% beträgt.

Die erfindungsgemäßen Verfahrensprodukte stellen klare, praktisch farblose Polyisocyanate der bereits oben genannten Zusammensetzung dar, die sich leicht, ohne Einsatz hoher Scherkräfte durch bloßes Einrühren in Wasser in sedimentationsstabile Dispersionen überführen lassen.

Die hervorragende Dispergierbarkeit bereits bei niedrigen Sulfonatgruppen-Gehalten in Verbindungen mit hohen NCO-Gehalten und vergleichsweise hohen Funktionalitäten stellt insbesondere für die Verwendung der erfindungsgemäßen Polyisocyanate in wässrigen 2K-PUR-Lacken einen Vorteil dar, da sich auf diese Weise hochvemetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen.

Gegebenenfalls können den nach dem erfindungsgemäßen Verfahren hergestellten Polyisocyanaten vor der Emulgierung noch weitere nichthydrophilierte Polyisocyanate, insbesondere Lackpolyisocyanate der obengenannten Art, zugesetzt werden, wobei die Mengenverhältnisse bevorzugt so gewählt werden, dass die resultierenden Polyisocyanatgemische den vorstehend unter a) bis d) genannten Bedingungen entsprechen, und somit ebenfalls erfindungsgemäße Polyisocyanate darstellen, da diese im allgemeinen aus Gemischen aus
(i) erfindungsgemäß hydrophil modifizierten Polyisocyanaten und
(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanate stellen wertvolle Ausgangsmaterialien zur Herstellung von Polyurethan-Kunststoffen nach dem Isocyanat-Polyadditionsverfahren dar.

Hierzu werden die Polyisocyanate vorzugsweise in Form wässriger Emulsionen eingesetzt, die in Kombination mit in Wasser dispergierten Polyhydroxylverbindungen im Sinne von wässrigen Zweikomponenten-Systemen zur Umsetzung gebracht werden können.

Besonders bevorzugt werden die erfindungsgemäßen Polyisocyanate als Vemetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vemetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden, durch Verwendung von dem Fachmann bekannten mechanischen Hilfmitteln oder auch unter Verwendung von Zweikomponenten-Spritzpistolen erfolgen.

In diesem Zusammenhang seien als Lackbindemittel oder Lackbindemittelkomponenten beispielhaft erwähnt: In Wasser gelöste oder dispergierte, Hydroxylgruppen aufweisende Polyacrylate, insbesondere solche des Molekulargewichtsbereichs 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wässrige Lackbindemittel werden die erfindungsgemäßen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatgemische in untergeordneten Mengen auch nichtfunktionellen wässrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanate auch in mit aus der Polyurethanchemie an sich bekannten Blockierungsmitteln blockierter Form in Kombination mit den obengenannten wässrigen Lackbindemitteln oder Lackbindemittelkomponenten im Sinne von wässrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanate formulierten wässrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanaten formulierten wässrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, zugegeben werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wässrigen Lackbindemitteln ermöglicht, führt die Verwendung der erfindungsgemäßen Polyisocyanate als Vernetzerkomponente für wässrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wässrige 2K-PUR-Lacke eignen sich die erfindungsgemäßen Polyisocyanate hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Die folgenden Beispiele dienen zur weiteren Erläuterung der Erfindung. Alle Prozentangaben beziehen sich, soweit nichts anders vermerkt, auf das Gewicht.

### Beispiele

### Beispiel 1

950 g (4,90 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden zusammen mit 50 g (0,23 val) 3-(Cyclohexylamino)-propansulfonsäure (CAPS), 29 g (0,23 mol) Dimethylcyclohexylamin und 257 g 1-Methoxypropyl-2-acetat unter trockenem Stickstoff 5 Stunden bei 80°C gerührt. Nach Abkühlen auf Raumtemperatur liegt eine praktisch farblose klare Lösung eines erfindungsgemäßen Polyisocyanatgemisches mit folgenden Kenndaten vor:

| | |
|---|---|
| Festgehalt | 80 % |
| NCO-Gehalt | 15,7 % |
| NCO-Funktionalität | 3,3 |
| Viskosität (23°C) | 590 mPas |
| Farbzahl | 15 APHA |
| Sulfonatgruppen-Gehalt | 1,4 % |
| Ethylenoxid-Gehalt | 0,0 % |

### Beispiel 2

970 g (5,0 val) des in Beispiel 1 beschriebenen Isocyanuratgruppen-haltigen Polyisocyanates auf Basis von HDI werden zusammen mit 30 g (0,14 val) 2-(Cyclohexylamino)-ethansulfonsäure (CHES), 18 g (0,14 mol) Dimethylcyclohexylamin und 255 g Dipropylenglykoldimethylether unter trockenem Stickstoff 4 Stunden bei 80°C gerührt. Nach Abkühlen auf Raumtemperatur liegt eine praktisch farblose klare Lösung eines erfindungsgemäßen Polyisocyanatgemisches mit folgenden Kenndaten vor:

| | |
|---|---|
| Festgehalt | 80 % |
| NCO-Gehalt | 16,1 % |
| NCO-Funktionalität | 3,4 |
| Viskosität (23°C) | 660 mPas |
| Farbzahl | 10 APHA |
| Sulfonatgruppen-Gehalt | 0,9 % |
| Ethylenoxid-Gehalt | 0,0 % |

### Beispiel 3

900 g (4,97 val) eines Isocyanuratgruppen-haltigen Polyisocyanates auf Basis von HDI mit einem NCO-Gehalt von 23,2 %, einer mittleren NCO-Funktionalität von 3,2 (nach GPC), einem Gehalt an monomerem HDI von 0,1 % und einer Viskosität von 1200 mPas (23°C) werden zusammen mit 100 g (0,45 val) CAPS und 57 g (0,45 mol) Dimethylcyclohexylamin unter trockenem Stickstoff 10 Stunden bei 80°C gerührt. Nach Abkühlen auf Raumtemperatur liegt ein erfindungsgemäßes, praktisch farbloses klares Polyisocyanatgemisch mit folgenden Kenndaten vor:

| | |
|---|---|
| Festgehalt | 100 % |
| NCO-Gehalt | 18,0 % |
| NCO-Funktionalität | 2,9 |
| Viskosität (23°C) | 9200 mPas |
| Farbzahl | 25 APHA |
| Sulfonatgruppen-Gehalt | 3,4 % |
| Ethylenoxid-Gehalt | 0,0 % |

### Beispiel 4

900 g (4,65 val) des in Beispiel 1 beschriebenen Isocyanuratgruppen-haltigen Polyisocyanates auf Basis von HDI werden zusammen mit 50 g (0,23 val) CAPS, 29 g (0,23 mol) Dimethylcyclohexylamin, 50 g (0,10 val) eines auf Methanol gestarteten, monofunktionellen Polyethylenoxidpolyethers eines mittleren Molekulargewichtes von 500 und 257 g Dipropylenglykoldimethylether als Lösungsmittel unter trockenem Stickstoff 6 Stunden bei 80°C gerührt. Nach Abkühlen auf Raumtemperatur liegt eine praktisch farblose klare Lösung eines erfindungsgemäßen Polyisocyanatgemisches mit folgenden Kenndaten vor:

| | |
|---|---|
| Festgehalt | 80 % |
| NCO-Gehalt | 14,1 % |
| NCO-Funktionalität | 3,3 |
| Viskosität (23°C) | 630 mPas |
| Farbzahl | 10 APHA |
| Sulfonatgruppen-Gehalt | 1,4 % |
| Ethylenoxid-Gehalt | 3,6 % |

### Beispiel 5

1357 g (3,84 val) eines 70 %ig in Butylacetat gelöst vorliegenden Isocyanuratgruppen-haltigen Polyisocyantes auf Basis von 1-Isocyanato-3,3,5-trimethyl-5-isocyanatomethylcyclohexan (IPDI) mit einem NCO-Gehalt von 11,9 %, einer mittleren NCO-Funktionalität von 3,3 (nach GPC), einem Gehalt an monomerem IPDI von 0,2 % und einer Viskosität von 650 mPas (23°C) werden zusammen mit 50 g (0,23 val) CAPS, 29 g (0,23 mol) Dimethylcyclohexylamin und weiteren 34 g Butylacetat unter trockenem Stickstoff 12 Stunden bei 80°C gerührt. Nach Abkühlen auf Raumtemperatur liegt eine praktisch farblose klare Lösung eines erfindungsgemäßen Polyisocyanatgemisches mit folgenden Kenndaten vor:

| | |
|---|---|
| Festgehalt | 70 % |
| NCO-Gehalt | 10,3 % |
| NCO-Funktionalität | 3,1 |
| Viskosität (23°C) | 810 mPas |
| Farbzahl | 10 - 15 APHA |
| Sulfonatgruppen-Gehalt | 1,2 % |
| Ethylenoxid-Gehalt | 0,0 % |

### Beispiel 6 (Vergleich)

950 g (4,90 val) des in Beispiel 1 beschriebenen Isocyanuratgruppen-haltigen Polyisocyanates auf Basis von HDI werden zusammen mit 50 g (0,36 val) 2-Methylaminoethansulfonsäure (Methyltaurin), 46 g (0,36 mol) Dimethylcyclohexylamin und 262 g 1-Methoxypropyl-2-acetat unter trockenem Stickstoff bei 80°C gerührt. Nach 8 Stunden ist die Reaktionsmischung noch trübe und inhomogen. Auch nach Temperaturerhöhung auf 120°C und weiteren 4 Stunden haben sich die Ausgangskomponenten nicht miteinander umgesetzt. Methyltaurin setzt sich im dunkelgelb gefärbten Reaktionsgemisch in kristalliner Form als Bodensatz ab.

### Beispiel 7 (Vergleich)

950 g (4,90 val) des in Beispiel 1 beschriebenen Isocyanuratgruppen-haltigen Polyisocyanates auf Basis von HDI werden zusammen mit 50 g (0,40 val) 2-Aminoethansulfonsäure (Taurin), 51 g (0,40 mol) Dimethylcyclohexylamin und 263 g 1-Methoxypropyl-2-acetat unter trockenem Stickstoff bei 80°C gerührt. Nach 8 Stunden ist die Reaktionsmischung noch trübe. Auch nach Temperaturerhöhung auf 120°C und weiteren 6 Stunden haben sich die Ausgangskomponenten nicht miteinander umgesetzt. Taurin setzt sich in der gelb gefärbten Reaktionsmischung als kristalliner Bodensatz ab.

### Beispiel 8 (Vergleich analog EP-B 0 703 255, Beispiel 5)

800 g (4,13 val) des in Beispiel 1 beschriebenen Isocyanuratgruppen-haltigen Polyisocyanates auf Basis von HDI werden zusammen mit 200 g (0,30 val) eines Natrium-Polyethylenoxidpolyetherdiolsulfonates (Tegomer® DS-3404, Th. Goldschmidt AG, Essen, DE; OH-Zahl: 84, Sulfonatgruppengehalt: ca. 6,0 %, Ethylenoxidgehalt: ca. 82,2 %) und 250 g 1-Methoxypropyl-2-acetat als Lösungsmittel unter trockenem Stickstoff 5 Stunden bei 80°C gerührt. Nach Abkühlen auf Raumtemperatur liegt eine gelbliche klare Lösung eines wasserdispergierbaren Polyisocyanatgemisches mit folgenden Kenndaten vor:

| | |
|---|---|
| Festgehalt | 80 % |
| NCO-Gehalt | 12,9 % |
| NCO-Funktionalität | 3,7 |
| Viskosität (23°C) | 1800 mPas |
| Farbzahl | 150 APHA |
| Sulfonatgruppen-Gehalt | 1,0 % |
| Ethylenoxid-Gehalt | 13,2 % |

### Beispiel 9 (Herstellung von Emulsionen)

Jeweils 35 g der 80 %ig gelösten erfindungsgemäßen Polyisocyanatgemische aus Beispiel 1, 2 und 4, 40 g der 70 %igen Lösung aus Beispiel 5 sowie 25 g des erfindungsgemäßen Polyisocyanatgemisches aus Beispiel 3 wurden in jeweils einem Erlenmeyerkolben mit 100 g entionisiertem Wasser, entsprechend einem Festkörpergehalt von jeweils ca. 20 Gew.-%, versetzt und anschließend jeweils 1 min mit Hilfe eines Magnetrührers bei 900 U/min gerührt. Die dabei erhaltenen Emulsionen waren auch nach einer Standzeit von 5 h noch völlig stabil. Sie zeigten weder sichtbare CO₂-Entwicklung noch Ausfällungen oder Bodensatz. Als Maß für die Dispergierbarkeit der unterschiedlichen Polyisocyanatgemische wurden mit Hilfe eines Gerätes Zetasizer (Malvern Instruments GmbH, Herrenberg, DE ) die mittlere Teilchengrößen bestimmt. Die nachfolgende Tabelle zeigt die gefundenen Werte:

| **Polyisocyanatgemisch aus** | **mittlere Teilchengröße [nm]** |
|---|---|
| Beispiel 1 | 116 |
| Beispiel 2 | 412 |
| Beispiel 3 | 83 |
| Beispiel 4 | 93 |
| Beispiel 5 | 242 |

### Beispiel 10 (Verwendung als Vernetzer für wässrige 2K-PUR-Lacke)

100 Gew.-Teile einer wässrigen Colöser-freien, hydroxyfunktionellen Polyacrylatdispersion mit einem Festkörpergehalt von 45 % und einem OH-Gehalt von 2,5 %, bezogen auf Festharz, im wesentlichen bestehend aus 48,0 % Methylmethacrylat, 27,4 % n-Butylacrylat, 21,6 % Hydroxy-C₃-alkylmethacrylat (Anlagerungsprodukt von Propylenoxid an Methacrylsäure) und 3,0 % Acrylsäure, wurden mit 0,5 Gew.-Teilen eines handelsüblichen Entschäumers (Foamaster® TCX, Henkel KGA, DE) gemischt. Diesem Ansatz wurden 39,5 Gew.-Teile des erfindungsgemäßen Polyisocyanatgemisches aus Beispiel 1 zugesetzt (entsprechend einem Äquivalentverhältnis von Isocyanatgruppen zu alkoholischen Hydroxylgruppen von 1 : 1) und die Mischung durch intensives Rühren (2000 U/min) homogenisiert. Anschließend wurde der Festkörpergehalt durch Zugabe von Wasser auf 40 % eingestellt.

Zum Vergleich wurde aus 100 Gew.-Teilen der oben beschriebenen hydroxyfunktionellen Polyacrylatdispersion und 48,0 Gew.-Teilen des Polyisocyanates gemäß EP-B 0 703 255 aus Beispiel 8 (entsprechend einem Äquivalentverhältnis von Isocyanatgruppen zu alkoholischen Hydroxylgruppen von 1 : 1) nach dem oben beschriebenen Verfahren ein Lack hergestellt.

Die Verarbeitungszeit der applikationsfertigen Lacke betrug etwa 3 Stunden. Die Lacke wurden in einer Nassfilm-Schichtdicke von 150 µm (ca. 60 µm trocken) auf Glasplatten appliziert und nach 20 minütigem Ablüften unter forcierten Bedingungen (30 min / 60°C) getrocknet. Es wurden Lackfilme mit folgenden Eigenschaften erhalten:

| **Polyisocyanat aus** | **Beispiel 1** | **Beispiel 8** (Vergleich) |
|---|---|---|
| **Filmoptik** | klar | trübe |
| **Glanz visuell**^{**a)**} | 0 | 5 |
| **Pendelhärte [s] nach 1 d / 7 d** ^{**b)**} | 125/143 | 79/105 |
| **Lösemittelbeständigkeit**^{**c)**} | | |
| Wasser (30 Min.) | 0 | 5 |
| Isopropanol/Wasser 1:1 (1 Min.) | 0 | 3 |
| MPA/Xylol 1:1 (1 Min.) | 0 | 1 |
| Butylglykol (1 Min.) | 0 | 2 |
| Aceton (1 Min.) | 1 | 4 |

| | | |
|---|---|---|
| ^{a)} Bewertung: 0 (sehr gut) - 5 (schlecht) | | |
| ^{b)} Pendelhärte nach König (DIN 53157) | | |
| ^{c)} Bewertung: 0 - 5 (0 = Lackfilm unverändert; 5 = völlig aufgelöst) | | |

Der Vergleich zeigt, dass die Verwendung der erfindungsgemäßen Polyisocyanate aus Beispiel 1 zu einem klaren, hochglänzenden, harten und lösemittelbeständigen Lackfilm führt, während unter Verwendung des Natriumsulfonatgruppen enthaltenden Polyisocyanates aus Beispiel 8 eine trübe und erheblich weichere Beschichtung erhalten wird, die darüberhinaus nicht wasserbeständig und nicht ausreichend lösemittelfest ist.

### Beispiel 11 (Herstellung eines blockierten Polyisocyanates)

350 g (1,31 val) des erfindungsgemäßen Polyisocyanatgemisches aus Beispiel 1 werden bei 70°C vorgelegt und innerhalb von 30 min portionsweise mit 126 g (1,31 val) 3,5-Dimethylpyrazol so versetzt, dass die Temperatur der Reaktionsmischung 80°C nicht überschreitet. Nach beendeter Zugabe rührt man die Mischung ca. 2 Stunden bei 70°C nach, bis IR-spektroskopisch keine freien Isocyanatgruppen mehr nachweisbar sind. Nach Abkühlen auf 40°C lässt man innerhalb von 30 min unter starkem Rühren 539 g entionisiertes Wasser zulaufen. Man erhält eine feinteilige blaustichige Dispersion eines blockierten Polyisocyanates mit folgenden Kenndaten:

| | |
|---|---|
| Festgehalt | 40 % |
| Gehalt an blockierten NCO-Gruppen | 5,4 % |
| NCO-Funktionalität | 3,7 |
| Viskosität (23°C) | 160 mPas |
| Colöser-Gehalt | 6,9 % |

## Patentansprüche

1. Durch Umsetzung von Polyisocyanaten mit 2-(Cyclohexylamino)-ethansulfonsäure und/oder 3-(Cyclohexylamino)-propansulfonsäure erhältliche modifizierte Polyisocyanate.

2. Modifizierte Polyisocyanate gemäß Anspruch 1, **gekennzeichnet durch**
a) eine mittlere Isocyanatfunktionalität von mindestens 1,8,
b) einen Gehalt an Isocyanatgruppen (berechnet als NCO; Molekulargewicht = 42) von 4,0 bis 26,0 Gew.-%,
c) einen Gehalt an Sulfonatgruppen (berechnet als SO₃⁻; Molekulargewicht = 80) von 0,1 bis 7,7 Gew.-% und gegebenenfalls
d) einen Gehalt an innerhalb von Polyetherketten gebundenen Ethylenoxideinheiten (berechnet als C₂H₂O; Molekulargewicht = 44) von 0 bis 19,5 Gew.-%, wobei die Polyetherketten im statistischen Mittel 5 bis 35 Ethylenoxideinheiten enthalten.

3. Modifizierte Polyisocyanate gemäß Ansprüchen 1 und 2, **gekennzeichnet durch**
a) eine mittleren Isocyanatfunktionalität von 2,0 bis 4,8,
b) einen Gehalt an Isocyanatgruppen (berechnet als NCO; Molekulargewicht = 42) von 7,0 bis 23,0 Gew.-%,
c) einen Gehalt an Sulfonatgruppen (berechnet als SO₃⁻; Molekulargewicht = 80) von 0,2 bis 6,3 Gew.-% und gegebenenfalls
d) einen Gehalt an innerhalb von Polyetherketten gebundenen Ethylenoxideinheiten (berechnet als C₂H₂O; Molekulargewicht = 44) von 0 bis 17,0 Gew.-%, wobei die Polyetherketten im statistischen Mittel 7 bis 30 Ethylenoxideinheiten enthalten.

4. Modifizierte Polyisocyanate gemäß Ansprüchen 1 bis 3, **dadurch gekennzeichnet, dass** es sich bei den Polyisocyanaten um aliphatische, cycloaliphatische, araliphatische und/oder aromatische Polyisocyanate handelt.

5. Modifizierte Polyisocyanate gemäß Ansprüchen 1 bis 4, **dadurch gekennzeichnet, dass** es sich bei den Polyisocyanaten um aliphatische und/oder cycloaliphatische Polyisocyanate handelt.

6. Verfahren zur Herstellung modifizierter Polyisocyanate gemäß Ansprüchen 1 bis 5, **dadurch gekennzeichnet, dass** unmodifizierte Polyisocyanate mit 2-(Cyclohexylamino)-ethansulfonsäure und/oder 3-(Cyclohexylamino)-propansulfonsäure in Gegenwart eines tertiären Amins umgesetzt werden.

7. Verfahren gemäß Anspruch 6, **dadurch gekennzeichnet, dass** die Umsetzung in Gegenwart von Ethylenoxideinheiten aufweisenden Polyalkylenoxidpolyetheralkoholen erfolgt und/oder die eingesetzten unmodifizierten Polyisocyanate bereits Ethylenoxidpolyether-Einheiten enthalten.

8. Verfahren gemäß Ansprüchen 6 und 7, **dadurch gekennzeichnet, dass** man
A) eine Polyisocyanatkomponente einer mittleren Funktionalität von 2,0 bis 5,0, mit einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% mit
B) 0,3 bis 25,0 Gew.-%, bezogen auf das Gesamtgewicht der Komponenten A) und B), 2-(Cyclohexylamino)-ethansulfonsäure und/oder 3-(Cyclohexylamino)-propansulfonsäure und gegebenfalls
C) bis zu 25 Gew.-%, bezogen auf das Gesamtgewicht der Komponenten A), B) und C), eines einwertigen, im statistischen Mittel von 5 bis 35 Ethylenoxideinheiten aufweisenden Polyalkylenoxidpolyetheralkohols in Gegenwart von
D) 0,2 bis 2,0 Äquivalenten, bezogen auf die Sulfonsäuregruppen der Komponente B), eines tertiären Amins
unter Einhaltung eines Äquivalentverhältnisses von NCO-Gruppen zu gegenüber NCO-Gruppen reaktiven Gruppen von 2 : 1 bis 400 : 1 miteinander umsetzt.

9. Verfahren gemäß Ansprüchen 6 bis 8, **dadurch gekennzeichnet, dass** man
A) eine Polyisocyanatkomponente einer mittleren Funktionalität von 2,3 bis 4,5, mit einem Gehalt an aliphatisch und/oder cycloaliphatisch gebundenen Isocyanatgruppen (berechnet als NCO; Molekulargewicht = 42) von 14,0 bis 24,0 Gew.-% mit
B) 0,5 bis 25,0 Gew.-%, bezogen auf das Gesamtgewicht der Komponenten A) und B), 2-(Cyclohexylamino)-ethansulfonsäure und/oder 3-(Cyclohexylamino)-propansulfonsäure und gegebenfalls
C) bis zu 20 Gew.-%, bezogen auf das Gesamtgewicht der Komponenten A), B) und C), eines einwertigen, im statistischen Mittel von 5 bis 35 Ethylenoxideinheiten aufweisenden Polyalkylenoxidpolyetheralkohols in Gegenwart von
D) 0,5 bis 1,5 Äquivalenten, bezogen auf die Sulfonsäuregruppen der Komponente B), eines tertiären Amins
unter Einhaltung eines Äquivalentverhältnisses von NCO-Gruppen zu gegenüber NCO-Gruppen reaktiven Gruppen von 4 : 1 bis 250 : 1 miteinander umsetzt.

10. Verfahren gemäß Ansprüchen 6 bis 9, **dadurch gekennzeichnet, dass** man als Polyisocyanatkomponente A) ein Polyisocyanat auf Basis von 1,6-Diisocyanatohexan, 1-Isocyanato-3,3,5-trimethyl-5-isocyanatomethylcyclohexan und/oder 4,4'-Diisocyanatodicyclohexylmethan einsetzt.

11. Verfahren gemäß Ansprüchen 6 bis 10, **dadurch gekennzeichnet, dass** man als Komponente D) aliphatisch und/oder cycloaliphatisch substituierte, acyclische und/oder cyclische tertiäre Amine einsetzt.

12. Verfahren gemäß Ansprüchen 6 bis 11, **dadurch gekennzeichnet, dass** man als Komponente D) Triethylamin, Dimethylcyclohexylamin und/oder N-Methylmorpholin einsetzt.

13. Verwendung der modifizierten Polyisocyanate gemäß Ansprüchen 1 bis 5 als Ausgangskomponente bei der Herstellung von Polyurethankunststoffen.

14. Verwendung der modifizierten Polyisocyanate gemäß Ansprüchen 1 bis 5 als Vernetzerkomponente für wasserlösliche oder -dispergierbare Lackbindemittel oder Lackbindemittelkomponenten.

15. Verwendung der modifizierten Polyisocyanate gemäß Ansprüchen 1 bis 5 als Ausgangskomponente zur Herstellung von mit aus der Polyurethanchemie bekannten Blockierungsmitteln blockierten Polyisocyanaten.

16. Beschichtungsmittel enthaltend modifizierte Polyisocyanate gemäß Ansprüchen 1 bis 5.

17. Mit Beschichtungsmitteln gemäß Anspruch 16 beschichtete Substrate.

## Claims

1. Modified polyisocyanates obtainable by reaction of polyisocyanates with 2-(cyclohexylamino)-ethanesulfonic acid and/or 3-(cyclohexylamino)-propanesulfonic acid.

2. Modified polyisocyanates according to Claim 1, **characterized by** a) an average isocyanate functionality of at least 1.8, b) a content of isocyanate groups (calculated as NCO; molecular weight=42) of 4.0 to 26.0 wt. %, c) a content of sulfonate groups (calculated as SO₃⁻; molecular weight=80) of 0.1 to 7.7 wt. % and optionally d) a content of ethylene oxide units bonded within polyether chains (calculated as C₂H₂O; molecular weight=44) of 0 to 19.5 wt. %, wherein the polyether chains contain a statistical average of 5 to 35 ethylene oxide units,

3. Modified polyisocyanates according to Claims 1 and 2, **characterized by** a) an average isocyanate functionality of 2.0 to 4.8, b) a content of isocyanate groups (calculated as NCO; molecular weight=42) of 7.0 to 23.0 wt. %, c) a content of sulfonate groups (calculated as SO₃⁻; molecular weight=80) of 0.2 to 6.3 wt. % and optionally d) a content of ethylene oxide units bonded within polyether chains (calculated as C₂H₂O; molecular weight=44) of 0 to 17.0 wt. %, wherein the polyether chains contain a statistical average of 7 to 30 ethylene oxide units.

4. Modified polyisocyanates according to Claims 1 to 3, **characterized in that** the polyisocyanates are aliphatic, cycloaliphatic, araliphatic and/or aromatic polyisocyanates.

5. Modified polyisocyanates according to Claims 1 to 4, **characterized in that** the polyisocyanates are aliphatic and/or cycloaliphatic polyisocyanates.

6. Process for the preparation of modified polyisocyanates according to Claims 1 to 5, **characterized in that** non-modified polyisocyanates are reacted with 2-(cyclohexylamino)-ethanesulfonic acid and/or 3-(cyclohexylamino)-propanesulfonic acid in the presence of a tertiary amine.

7. Process according to Claim 6, **characterized in that** the reaction is carried out in the presence of polyalkylene oxide polyether alcohols which contain ethylene oxide units and/or the non-modified polyisocyanates employed already contain ethylene oxide polyether units.

8. Process according to claims 6 and 7, **characterized in that** A) a polyisocyanate component with an average functionality of 2.0 to 5.0 and a content of aliphatically, cycloaliphatically, araliphatically and/or aromatically bonded isocyanate groups (calculated as NCO; molecular weight=42) of 8.0 to 27.0 wt. % with B) 0.3 to 25.0 wt. %, based on the total weight of components A) and B), of 2-(cyclohexylamino)-ethanesulfonic acid and/or 3-(cyclohexylamino)-propanesulfonic acid and optionally C) up to 25 wt. %, based on the total weight of components A), B) and C), of a monohydric polyalkylene oxide polyether alcohol containing a statistical average of 5 to 35 ethylene oxide units, in the presence of D) 0.2 to 2.0 equivalents, based on the sulfonic acid groups of component B), of a tertiary amine are reacted with one another observing an equivalent ratio of NCO groups to groups which are reactive towards NCO groups of 2:1 to 400:1.

9. Process according to Claims 6 to 8, **characterized in that** A) a polyisocyanate component with an average functionality of 2.3 to 4.5 and a content of aliphatically and/or cycloaliphatically bonded isocyanate groups (calculated as NCO; molecular weight=42) of 14.0 to 24.0 wt. % with B) 0.5 to 25.0 wt. %, based on the total weight of components A) and B), of 2-(cyclohexylamino)-ethanesulfonic acid and/or 3-(cyclohexylamino)-propanesulfonic acid and optionally C) up to 20 wt. %, based on the total weight of components A), B) and C), of a monohydric polyalkylene oxide polyether alcohol containing a statistical average of 5 to 35 ethylene oxide units, in the presence of D) 0.5 to 1.5 equivalents, based on the sulfonic acid groups of component B), of a tertiary amine are reacted with one another observing an equivalent ratio of NCO groups to groups which are reactive towards NCO groups of 4:1 to 250:1.

10. Process according to Claims 6 to 9, **characterized in that** a polyisocyanate based on 1,6-diisocyanatohexane, 1-isocyanato-3,3,5-trimethyl-5-isocyanatomethylcyclohexane and/or 4,4'-diisocyanatodicyclohexylmethane is employed as the polyisocyanate component A).

11. Process according to Claims 6 to 10, **characterized in that** aliphatically and/or cycloaliphatically substituted, acyclic and/or cyclic tertiary amines are employed as component D).

12. Process according to Claims 6 to 11, **characterized in that** triethylamine, dimethylcyclohexylamine and/or N-methylmorpholine is employed as component D).

13. Use of the modified polyisocyanates according to Claims 1 to 5 as starting components in the preparation of polyurethane plastics.

14. Use of the modified polyisocyanates according to Claims 1 to 5 as crosslinking components for watersoluble or -dispersible paint binders or paint binder components.

15. Use of the modified polyisocyanates according to Claims 1 to 5 as starting components for the preparation of polyisocyanates blocked with blocking agents known from polyurethane chemistry.

16. Coating compositions comprising modified polyisocyanates according to Claims 1 to 5.

17. Substrates coated with coating compositions according to Claim 16.

## Revendications

1. Polyisocyanates modifiés obtenus par mise en réaction de polyisocyanates avec de l'acide 2-(cyclohexylamino)-éthanesulfonique et/ou de l'acide 3-(cyclohexylamino)-propanesulfonique.

2. Polyisocyanates modifiés selon la revendication 1, **caractérisés par**
a) une fonctionnalité isocyanate moyenne d'au moins 1,8,
b) un taux de radicaux isocyanate (calculés comme NCO; poids moléculaire = 42) de 4,0 à 26,0 % en poids,
c) un taux de radicaux sutfonate (calculés comme SO₃; poids moléculaire = 80) de 0,1 à 7,7 % en poids et, éventuellement,
d) un taux d'unités d'éthylèneoxyde (calculées comme C₂H₂O; poids moléculaire = 44) liées au sein de chaînes de polyéther de 0 à 19,5% en poids, les chaînes de polyéther contenant 5 à 35 unités d'éthylèneoxyde en moyenne statistique.

3. Polyisocyanates modifiés selon les revendications 1 et 2, **caractérisés par**
a) une fonctionnalité isocyanate moyenne de 2,0 à 4,8,
b) un taux de radicaux isocyanate (calculés comme NCO; poids moléculaire = 42) de 7,0 à 23,0 % en poids,
c) un taux de radicaux sutfonate (calculé comme SO₃; poids moléculaire = 80) de 0,2 à 6,3 % en poids et, éventuellement,
d) un taux d'unités d'éthylèneoxyde (calculées comme C₂H₂O; poids moléculaire = 44) liées au sein de chaînes de polyéther de 0 à 17,0% en poids, les chaînes de polyéther contenant 7 à 30 unités d'éthylèneoxyde en moyenne statistique.

4. Polyisocyanates modifiés selon les revendications 1 à 3, **caractérisés en ce que** les polyisocyanates sont des polyisocyanates aliphatiques, cycloaliphatiques, araliphatiques et/ou aromatiques.

5. Polyisocyanates modifiés selon les revendications 1 à 4, **caractérisés en ce que** les polyisocyanates sont des polyisocyanates aliphatiques et/ou cycloaliphatiques.

6. Procédé de préparation de polyisocyanates modifiés selon les revendications 1 à 5, **caractérisé en ce que** des polyisocyanates non modifiés sont mis en réaction avec de l'acide 2-(cyclohexylamino)-éthanesulfonique et/ou de l'acide 3-(cyclohexylamino)-propanesulfonique en présence d'une amine tertiaire.

7. Procédé selon la revendication 6, **caractérisé en ce que** la mise en réaction se déroule en présence de polyalkylèneoxydepolyétheralcools présentant des unités d'éthylèneoxyde et/ou les polyisocyanates non modifiés utilisés contiennent déjà des unités d'éthylèneoxydepolyéther.

8. Procédé selon les revendications 6 et 7, **caractérisé en ce que** l'on met en réaction
A) un composant polyisocyanate d'une fonctionnalité moyenne de 2,0 à 5,0 avec un taux de radicaux isocyanate liés aliphatiquement, cycloaliphatiquement, araliphatiquement et/ou aromatiquement (calculés comme NCO; poids moléculaire = 42) de 8,0 à 27,0 % en poids avec
B) 0,3 à 25,0 % en poids par rapport au poids total des composants A) et B) d'acide 2-(cyclohexylamino)-éthanesulfonique et/ou d'acide 3-(cyclohexylamino)-propanesulfonique et, éventuellement,
C) jusqu'à 25% en poids par rapport au poids total des composants A), B) et C) d'un polyalkylèneoxydepolyétheralcool monovalent, présentant en moyenne statistique 5 à 35 unités d'éthylèneoxyde en présence de
D) 0,2 à 2,0 équivalents, par rapport aux radicaux d'acide sulfonique du composant B), d'une amine tertiaire,
en respectant un rapport équivalent des radicaux NCO aux radicaux réactifs aux radicaux NCO de 2:1 à 400:1.

9. Procédé selon les revendications 6 à 8, **caractérisé en ce que** l'on met en réaction
A) un composant polyisocyanate d'une fonctionnalité moyenne de 2,3 à 4,5 avec un taux de radicaux isocyanate liés aliphatiquement et/ou cycloaliphatiquement (calculés comme NCO; poids moléculaire = 42) de 14,0 à 24,0 % en poids avec
B) 0,5 à 25,0 % en poids par rapport au poids total des composants A) et B) d'acide 2-(cyclohexylamino)-éthanesulfonique et/ou d'acide 3-(cyclohexylamino)-propanesulfonique et, éventuellement,
C) jusqu'à 20 % en poids par rapport au poids total des composants A), B) et C) d'un polyalkylèneoxydepolyétheralcool monovalent, présentant en moyenne statistique 5 à 35 unités d'éthylèneoxyde en présence de
D) 0,5 à 1,5 équivalent, par rapport aux radicaux d'acide sulfonique du composant B), d'une amine tertiaire,
en respectant un rapport équivalent des radicaux NCO aux radicaux réactifs aux radicaux NCO de 4:1 à 250:1.

10. Procédé selon les revendications 6 à 9, **caractérisé en ce que** l'on utilise comme composant polyisocyanate A) un polyisocyanate à base de 1,6-diisocyanatohexane, de 1-isocyanato-3,3,5-triméthyl-5-isocyanatométhylcyclohexane et/ou 4,4'-diisocyanatodicyclohexylméthane.

11. Procédé selon les revendications 6 à 10, **caractérisé en ce que** l'on utilise comme composant D) des amines tertiaires acycliques et/ou cycliques substituées aliphatiquement et/ou cycloaliphatiquement.

12. Procédé selon les revendications 6 à 11, **caractérisé en ce que** l'on utilise comme composant D) la triéthylamine, la diméthylcyclohexylamine et/ou la N-méthylmorpholine.

13. Mise en oeuvre des polyisocyanates modifiés selon les revendications 1 à 5 comme composant de départ pour la préparation de plastiques de polyuréthane.

14. Mise en oeuvre des polyisocyanates modifiés selon les revendications 1 à 5 comme composant réticulant pour des liants de peinture et composants de liants de peinture solubles ou dispersibles dans l'eau.

15. Mise en oeuvre des polyisocyanates modifiés selon les revendications 1 à 5 comme composant de départ pour la préparation de polyisocyanates bloqués avec des agents bloquants connus de la chimie des polyuréthanes.

16. Moyen d'enduction contenant des polyisocyanates modifiés selon les revendications 1 à 5.

17. Substrats revêtus de moyens d'enduction selon la revendication 16.
